# EUROPEAN PATENT SPECIFICATION

(11) **EP 3 930 267 B1**
(45) Date of publication and mention of the grant of the patent: **22.01.2025**
(21) Application number: 20759906.9
(22) Date of filing: 17.02.2020
(51) Int. Cl.: H04L 12/12, H04L 12/40, H04L 45/24, H04L 45/28, H04L 47/125

(54) **LINK AGGREGATION PORT SWITCHING METHOD, NETWORK DEVICE AND COMPUTER STORAGE MEDIUM**
VERFAHREN ZUR UMSCHALTUNG VON LINKAGGREGATIONSPORTS, NETZWERKVORRICHTUNG UND COMPUTERSPEICHERMEDIUM
PROCÉDÉ DE COMMUTATION DE PORT D'AGRÉGATION DE LIAISONS, DISPOSITIF DE RÉSEAU ET SUPPORT DE STOCKAGE INFORMATIQUE

(30) Priority: 18.02.2019 CN 201910122286
(43) Date of publication of application: 29.12.2021
(73) Proprietor: ZTE Corporation, Shenzhen, Guangdong 518057 (CN)
(72) Inventor: PAN, Tingshan, Shenzhen, Guangdong 518057 (CN)
(74) Representative: Baudler, Ron
(86) International application number: PCT/CN2020/075504
(87) International publication number: WO 2020/168996

(56) References cited:
- CN-A- 101 540 722
- CN-A- 103 780 472
- CN-A- 103 780 472
- CN-A- 103 944 776
- CN-A- 106 411 599
- CN-A- 106 411 599
- US-A1- 2014 192 817
- US-A1- 2018 307 474
- US-B1- 8 243 594

## Description

### Field of the Invention

Embodiments of the present disclosure relate to, but are not limited to, the field of Ethernet switch device.

### Background of the Invention

With the rapid development of computer and network technologies and the continuous emergence of various network applications, stability of basic data communication networks becomes more and more important. In order to increase bandwidth and realize functions such as link transmission flexibility and redundancy, switches are generally linked via aggregation ports to realize load sharing of outgoing and incoming traffic at respective member ports. States of a member of an aggregation group includes an up state and a down state. When a port switches from the up state to the down state (which may be called an LACP (link aggregation control protocol) switching state), it is required to quickly delete this port from the aggregation group and use another member port in the up state among the aggregation group to participate in subsequent load sharing of traffic; and when the port switches from the down state to the up state (which may be called an LACP switching-back state), it is required to quickly add this port to the aggregation group, so that this aggregation port may quickly participate in subsequent load sharing of traffic.

However, in relevant technologies, when the port switches from the down state to the up state, since there is a time difference between time instants when ports of devices at two ends of a link are added to the aggregation group, packet loss may be caused during data transmission. For example, after a member at one end is added to the aggregation group, traffic would be loaded and allocated to this port immediately and be delivered to the other end. Since the other end has not been added to the aggregation group and is still in a block state, the traffic cannot pass through the other end, so that a lot of packet loss occurs.

Chinese patent CN103780472B discloses a method and a device for managing a selected port of an aggregation port group. The method includes: when the member port of the local device is added to the selected port list, and the member port is not the first one selected, the local device prohibits adding the member port to the shared transmission of user traffic before determining that the member port of the peer device corresponding to the member port completes the data reception preparation; and when the local device receives the instruction to shut down the shutdown selected port, the local device maintains receiving the user traffic sent by the peer device through the selected port before determining that the peer device stops sending data through the member port corresponding to the selected port. In the disclosure, a packet loss rate is reduced in a link aggregation system.

Chinese patent application CN106411599A discloses an aggregated link recovering method and apparatus, which relate to the technical field of communications. The method includes the following steps: after the determination that the target port is updated from the offline state to the online state, determining that the target port belongs to a member port of a target aggregation group in a selected state; setting the target port as a single port in a standby mode and refreshing the state of the target port to the forwarding state in which flows are received but not sent; and recovering the target port to a normally functioning port after a preset interval and updating the state of the target port to the flow load sharing state so as to realize the recovery of the aggregated link corresponding to the target port. According to the technical solution provided by the disclosure, flow loss incurred from the manual aggregation manner can be reduced.

### Summary of the Invention

The present invention relates to a link aggregation port switching method, a network device and a computer storage medium, as defined in the annexed claims.

An embodiment of the present disclosure provides a link aggregation port switching method. The method includes: adding a first port to an aggregation link in an ingress direction and setting an ingress forwarding state of the first port to be a permitted forwarding state when the first port of link aggregation switches from a down state to an up state; and adding the first port to the aggregation link in an egress direction when it is determined that an ingress forwarding state is set to be a permitted forwarding state by a peer end of the first port.

An embodiment of the present embodiment further provides a network device. The network device is provided with a first port of link aggregation, a processor, and a memory for storing a computer program capable of running on the processor. The processor is configured to, when executing the computer program, implement steps of any link aggregation port switching method herein.

An embodiment of the present embodiment further provides a computer storage medium, on which a computer program is stored. The computer program, when executed by a processor, causes the processor to implements steps of any link aggregation port switching method herein.

### Brief Description of the Drawings

Fig. 1 schematically shows load sharing when there is no malfunction in an aggregation link in an embodiment of the present disclosure;
Fig. 2 schematically shows load sharing when there is malfunction in an aggregation link in an embodiment of the present disclosure;
Fig. 3 schematically shows a flowchart of a link aggregation port switching method in an embodiment of the present disclosure;
Fig. 4 schematically shows structural components of a link aggregation port switching apparatus in an embodiment of the present disclosure; and
Fig. 5 schematically shows a structure of a network device in an embodiment of the present disclosure.

### Detailed Description of the Embodiments

The present disclosure is further described in detail in conjunction with accompanying drawings and embodiments. It shall be appreciated that specific embodiments described herein are intended only to explain, rather than limit, the present disclosure.

Embodiments of the present disclosure may be applied to a scenario of data interaction between network devices. Herein, the network device may be a switch or an Ethernet switch device of other types.

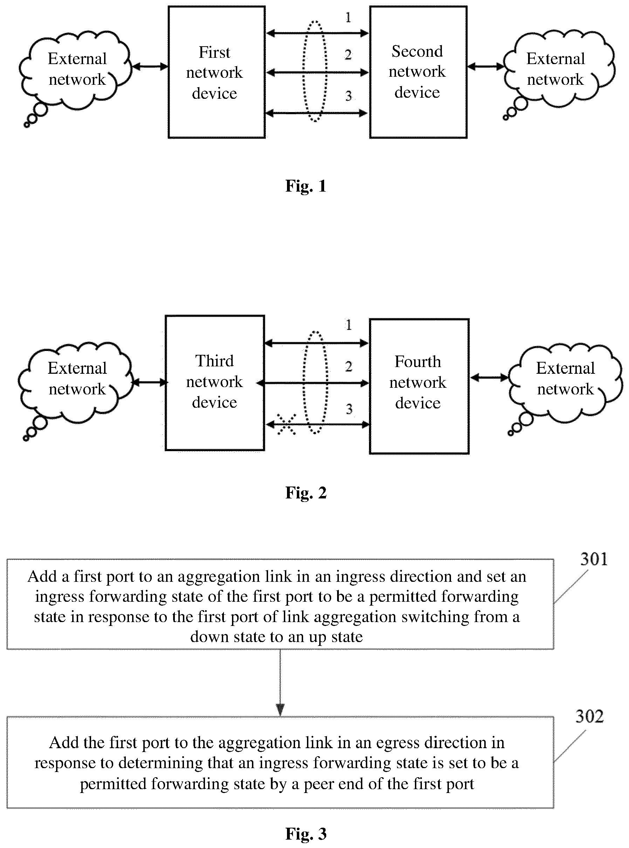

Fig. 1 schematically shows load sharing when there is no malfunction in an aggregation link in an embodiment of the present disclosure. As shown in Fig. 1, a first network device and a second network device may perform data interaction therebetween through an aggregation link, and both the first network device and the second network device may be connected to an external network. Referring to Fig. 1, aggregation group members of the first network device include a port 1, a port 2, and a port 3, and aggregation group members of the second network device include a port 1, a port 2, and a port 3. When there is no malfunction in the aggregation link, communication connection between respective ports of an aggregation group of the first network device and corresponding ports of the aggregation group members of the second network device may be realized. In this way, all of ports 1, ports 2, and ports 3 among aggregation group members may participate in load sharing of traffic.

Fig. 2 schematically shows load sharing when there is malfunction in an aggregation link in an embodiment of the present disclosure. As shown in Fig. 2, a third network device and a fourth network device may perform data interaction therebetween through an aggregation link, and both the third network device and the fourth network device may be connected to an external network. Referring to Fig. 2, aggregation group members of the third network device include a port 1, a port 2, and a port 3, and aggregation group members of the fourth network device include a port 1, a port 2, and a port 3. When there is malfunction in a link between ports 3, communication connection between the port 1 and the port 2 of an aggregation group of the third network device and the port 1 and the port 2 of the aggregation group members of the fourth network device may be realized. In this way, only ports 1 and ports 2 among aggregation group members may participate in load sharing of traffic, and ports 3 may not participate in load sharing of traffic.

In relevant technologies, the network device mainly has the following two serious problems in implementation of link aggregation functions.
1) From an aggregation port switching to the down state to performing service switching for devices at two ends, it takes much time to delete the port in the down state from the aggregation group. Before deletion, packets are still been forwarded to the port in the down state, and thus packet loss is caused. The main reason is as follows. The network device may monitor the state of the port by means of a monitoring task (for example, the monitoring task is a linkscan task). In order to avoid a central processing unit (CPU) being busy, the monitoring task has an execution period of more than 200 ms. Moreover, it is required to send a report to the CPU of the network device for processing when it is sensed that the port switches to the down state. However, the CPU may be processing another high-priority task, and thus is unable to execute an operation of deleting the port in the down state from the aggregation group immediately.
2) It cannot be ensured that a lot of packet loss does not occur during the process of recovering from link malfunction. The reasons why packet loss is caused during the process of switching-back are as follows. Two network devices perform data interaction based on a dynamic LACP, and when ports switch to the up state, respective links may perform interaction based on an LACP protocol, and do not interfere with each other. After two ends (two network devices) negotiate successfully, a platform may deliver information of activated aggregation group members to a drive module. Here, it cannot be ensured that the platform delivers the information of activated aggregation group members to the two network devices simultaneously. Moreover, time delay and error may exist between processes of delivering the information of aggregation group members from the platform to drive modules of two network devices. As a result, items of aggregation group members at bottom layers of the two network devices are not updated simultaneously. Accordingly, members at one end are added to the aggregation group first, while members at the other end are added to the aggregation group later. That is, time instants of adding members at two ends to the aggregation group are not consistent. The larger a time difference between the time instants of adding members at two ends to the aggregation group is, the longer a time length of packet loss. After a member at one end is added to the aggregation group, traffic would be loaded and allocated to this port immediately and be delivered to the other end. The other end is still in a deactivated state because it has not been added to the aggregation group. That is, the port is in a block state. Thus, the traffic cannot pass through the other end, so that a lot of packet loss occurs. The time length of packet loss is the same as the time difference between time instants of adding members at two ends to the aggregation group, and the time length is more than 1 s. However, when a port switches from the down state to the up state, theoretically adding the port to the aggregation group members may not be performed immediately, so that occurrence of packet loss can be avoided when two network devices transfer data.

Based on the above recited description, the following embodiments are provided.

### Embodiment One

Embodiment One of the present disclosure provides a link aggregation port switching method, which may be applied to a network device.

Fig. 3 shows a flowchart of the link aggregation port switching method in the present embodiment. As shown in Fig. 3, this process includes a step 301 and a step 302.

At step 301, when a first port of link aggregation switches from a down state to an up state, the first port is added to an aggregation link in an ingress direction, and an ingress forwarding state of the first port is set to be a permitted forwarding state (a forward state).

Here, ports provided on a network device may become ports of link aggregation based on the LACP protocol, and the first port of link aggregation may be any port of aggregation group members. A peer end of the above first port means here a corresponding port of a network device at a peer end. For example, for a structure shown in Fig. 1, when the first port is a port k of the first network device, the peer end of the first port is a port k of the second network device, and k may be 1, 2, or 3. For a structure shown in Fig. 2, when the first port is a port k of the third network device, the peer end of the first port is a port k of the fourth network device; and when the first port is a port k of the fourth network device, the peer end of the first port is a port k of the third network device.

In actual application, a monitoring task may be established for a state of a port of the link aggregation, and a state of the first port of the link aggregation may be monitored according to the above monitoring task.

In the present embodiment, the aggregation link is an aggregation link based on the LACP protocol. After the above first port is added to the aggregation link in the ingress direction, a packet entering the first port (a packet received at the first port) would not be forwarded in a same aggregation group, so that a loop between aggregation links can be eliminated.

In actual application, in an egress direction, a state of the first port may be set based on the LACP protocol. That is, in the egress direction, it is determined whether the state of the first port is a forward state or a block state based on the LACP.

At step S302, when it is determined that an ingress forwarding state is set to be a permitted forwarding state by a peer end of the first port, the first port is added to the aggregation link in an egress direction.

It may be understood that, by adding the first port to the aggregation link in the egress direction when the ingress forwarding state is set to be a forward state by a peer end of the first port, it can be ensured that the peer end of the first port may perform forwarding immediately when traffic transmitted from the first port arrives at the peer end of the first port, so as to avoid occurrence of packet loss. That is, during recovering of a link of aggregation group members, traffic of a data packet between the network devices can quickly re-allocated to all of aggregation group member ports, and meanwhile no packet loss during switching-back can be achieved.

In the present embodiment, with respect to how to determine that the ingress forwarding state is set to be the permitted forwarding state by the peer end of the first port, description can be made according to the following circumstances.

In a first circumstance, separation of transmitting and receiving is not achieved when a port state is set based on the LACP protocol. That is, a state of each port of link aggregation in the ingress direction and a state of each port of link aggregation in the egress direction are not set independently.

Regarding the first circumstance, after the step S301, a private protocol packet is transmitted to the peer end of the first port via the first port immediately, and after waiting for a first preset time length, it is determined that the peer end of the first port sets an ingress forwarding state to be a forward state.

Regarding a manner for setting the first preset time length, in an example, the first preset time length is larger than or equal to a sum of a pre-estimated packet transmission time length and a pre-estimated first state changing time length. The packet transmission time length refers to a time length during which the private protocol packet is transmitted from the first port to the peer end of the first port. The first state changing time length refers to a time length during which the peer end of the first port sets the ingress forwarding state to be the permitted forwarding state after receiving the private protocol packet. For example, the first preset time length may be set to be 100 ms.

In actual application, a CPU of the network device at the peer end, after receiving the private protocol packet, may set an ingress state of the peer end of the first port to be a forward state. Here, an egress state of the peer end of the first port may be set based on the LACP protocol.

It can be seen that, in the present embodiment, after transmitting the private protocol packet via the first port, delay is performed for the first preset time length, and then a switching-back operation based on the LACP protocol is performed. In the egress direction, the first port is added to the aggregation link to participate in forwarding. It can be understood that, by performing delay for the first preset time length, the network device at the peer end has set the ingress forwarding state to be the forward state, so that packet loss does not occur during link data transmission when the first port switches from the down state to the up state. In other words, no packet loss during switching-back can be achieved.

Here, the first circumstance may be applied to all LACP mating. That is, the first circumstance may not only be applied to direct port mating based on the LACP protocol between network devices but also be applied to mating based on the LACP protocol between network devices by performing transparent transmission through another device.

In a second circumstance, separation of transmitting and receiving is achieved when a port state is set based on the LACP protocol. That is, a state of each port of link aggregation in the ingress direction and a state of each port of link aggregation in the egress direction are set independently.

Regarding the second circumstance, since separation of transmitting and receiving is achieved when a port state is set based on the LACP protocol, an ingress forwarding state of each port of link aggregation (each port of LACP members) is always a forward state.

It can be seen that, regarding the second circumstance, after the step S301, a member port in the aggregation link is set immediately, and the first port is added to the aggregation link in the egress direction to participate in forwarding. In this way, when a packet is transmitted from the first port to the peer end, since an ingress of the peer end is always in the forward state, packet loss does not occur during link data transmission when the first port switches from the down state to the up state. In other words, no packet loss during switching-back can be achieved.

Here, the second circumstance may not only be applied to direct port mating (without performing transparent transmission through another layer 2 device) based on the LACP protocol between network devices but also be applied to a scenario of mating based on the LACP protocol between network devices by performing transparent transmission through another device. This is because a loop will not be formed even if transparent transmission through another device is performed between the network devices.

In a third circumstance, separation of transmitting and receiving is not achieved when a port state is set based on the LACP protocol. That is, a state of each port of link aggregation in the ingress direction and a state of each port of link aggregation in the egress direction are not set independently.

Regarding the third circumstance, waiting for a second preset time length may be performed after the step S301, so that it can be determined that the peer end of the first port sets an ingress forwarding state to be a forward state.

Regarding a manner of setting the second preset time length, in an example, the second preset time length is larger than or equal to a pre-estimated second state changing time length. The second state changing time length is a time interval between a first time instant and a second time instant. The first time instant is a time instant when the first port switches from the down state to the up state, and the second time instant is a time instant when the peer end of the first port sets the ingress forwarding state to be the forward state. For example, the second preset time length may be set to be 5 s.

It can be seen that, in the present embodiment, by performing delay for the second preset time length and then performing the switching-back operation based on the LACP operation, in the egress direction, the first port is added to the aggregation link to participate in forwarding. It can be understood that by performing delay for the second preset time length, the network device at the peer end has set the ingress forwarding state to be the forward state, so that packet loss does not occur during link data transmission when the first port switches from the down state to the up state. In other words, no packet loss during switching-back can be achieved.

Here, the third circumstance may be applied to all LACP mating. That is, the third circumstance may not only be applied to direct port mating based on the LACP protocol between network devices but also be applied to mating based on the LACP protocol between network devices by performing transparent transmission through another device.

Further, in the present embodiment, deletion of a member from an LACP switching aggregation group may also be implemented through the following manners.
1) A monitoring frequency of a port state of the link aggregation is improved, and when it is monitored that the first port of the link aggregation switches from the up state to the down state, the first port is deleted from the aggregation link.
   In relevant technologies, a monitoring period of the port state of the link aggregation is 200 ms. However, in the present embodiment, the monitoring frequency of the port state of the link aggregation may be improved, and the monitoring period of the port state of the link aggregation is shortened to be 10 ms. It can be understood that, by improving the monitoring frequency of the port state of the link aggregation, the first port can be quickly deleted from the aggregation link when the first port switches from the down state to the up state.
2) Priority of a monitoring task of a port state of the link aggregation is improved; and when it is monitored that the first port of the link aggregation switches from the up state to the down state, the first port is deleted from the aggregation link.
   It can be understood that, by improving the priority of the monitoring task of the port state of the link aggregation, the first port can be quickly deleted from the aggregation link when the first port switches from the down state to the up state.
3) A monitoring frequency of a port state of the link aggregation is improved, and priority of a monitoring task of the port state of the link aggregation is improved; and when it is monitored that the first port of the link aggregation switches from the up state to the down state, the first port is deleted from the aggregation link.

In relevant technologies, a monitoring period of the port state of the link aggregation is 200 ms, and priority of the monitoring task of the port state of the link aggregation is relatively low. However, in the present embodiment, the monitoring frequency of the port state of the link aggregation may be improved, and the priority of the monitoring task of the port state of the link aggregation may be improved. In this way, when the first port of the link aggregation switches from the up state to the down state, the first port can be quickly deleted from the aggregation link.

In actual application, CPUs of the network devices may perform high-frequency monitoring (for example, 10 ms once) on the port state of the aggregation link through an independent high-priority task. If the first port of the link aggregation switches from the up state to the down state, the monitoring task notifies a chip to execute local deletion of the port of the link aggregation, so as to achieve quick switching. Meanwhile, the monitoring task may notify the LACP protocol to perform local deletion of a member port of the link aggregation, so that after quick switching, it can be ensured that a port state of a bottom-layer chip and a port state in the LACP protocol are consistent. A processing procedure that the monitoring task notifies the chip to execute local deletion of the port of the link aggregation is independent from a software processing procedure that the LACP protocol performs local deletion of the member port of the link aggregation.

In actual application, step 301 to step 302 may be realized by means of a processor of a network device. The above processor may be at least one of an application specific integrated circuit (ASIC), a digital signal processor (DSP), a digital signal processing device (DSPD), a programmable logic device (PLD), a field programmable gate array (FPGA), a CPU, a controller, a microcontroller, and a micro-processor unit. An electronic device for implementing the above functions of the processor may also be other devices, and specific limitation is not made in the present embodiment.

### Embodiment Two

In order to further explain the objective of the present disclosure, further illustration is made based on Embodiment One of the present disclosure.

An application scenario of Embodiment Two of the present disclosure is as follows. Ports provided on a network device A and a network device B are ports which form link aggregation based on the LACP protocol. On the network device A and the network device B, ports of link aggregation include ports 1, ports 2, and ports 3, and the ports 1, the ports 2, and the ports 3 form an aggregation link for load forwarding. A port 1 switches from the up state to the down state.

CPUs of the network devices A and B perform high-frequency monitoring (for example, 10 ms once) on a port state of the aggregation link through an independent high-priority task. When it is found that a port 1 switches from the up state to the down state, a chip is notified immediately to delete the port 1 from aggregation group members, so as to achieve quick switching. The time for switching is about 10 ms. Moreover, the CPUs of the network devices A and B give a notice to the LACP protocol to perform local deletion of the port from the aggregation group members, so that a port state in the bottom-layer chip is consistent with a port state in the LACP protocol.

### Embodiment Three

In order to further explain the objective of the present disclosure, further illustration is made based on Embodiment One of the present disclosure.

An application scenario of Embodiment Three of the present disclosure is as follows. Ports provided on a network device A and a network device B are ports which form link aggregation based on the LACP protocol. On the network device A and the network device B, ports of link aggregation include ports 1, ports 2, and ports 3, and the ports 1, the ports 2, and the ports 3 form an aggregation link for load forwarding. The ports 1 and the port 2 are always in the up state, and a port 3 switches from the down state to the up state. The network device A and the network device B may not be directly mated based on the LACP protocol, and there may be a layer 2 network device, through which transparent transmission is performed based on the LACP protocol, between the network device A and the network device B.

CPUs of the network devices A and B perform high-frequency monitoring (for example, 10 ms once) on a port state of the aggregation link through an independent high-priority task. When it is found that a port 3 switches from the down state to the up state, if separation of transmitting and receiving is not achieved when the port state is set based on the LACP protocol, an ingress forwarding state of the port 3 at a local end is set to be a forward state immediately. Meanwhile, the port 3 is added to the aggregation link in an ingress direction, and a state of the port 3 in an egress direction may be set based on the LACP protocol. A private protocol packet is transmitted to a peer end of the port 3 via the port 3.

After a private protocol packet is transmitted to a peer end of the port 3 via the port 3, delay for 100 ms is performed, so as to determine that the peer end sets a corresponding port to be the forward state (during a 100 ms time period of delay, the peer end receives the private protocol packet, and sets the state of the corresponding port 3 to be the forward state according to the content of the packet). At this time, a switching-back operation based on the LACP protocol is performed then. In the egress direction, the port 3 is added to the aggregation link to participate in forwarding. It can be understood that, by performing delay for 100 ms, the network device at the peer end has set the ingress forwarding state to be the forward state, so that no packet loss during switching-back can be achieved.

### Embodiment Four

In order to further explain the objective of the present disclosure, further illustration is made based on Embodiment One of the present disclosure.

An application scenario of Embodiment Four of the present disclosure is as follows. Ports provided on a network device A and a network device B are ports which form link aggregation based on the LACP protocol. On the network device A and the network device B, ports of link aggregation include ports 1, ports 2, and ports 3, and the ports 1, the ports 2, and the ports 3 form an aggregation link for load forwarding. The ports 1 and the port 2 are always in the up state, and a port 3 switches from the down state to the up state. The network device A and the network device B are directly mated based on the LACP protocol, and there is no layer 2 network device, through which transparent transmission is performed based on the LACP protocol, between the network device A and the network device B.

A CPU of the network device A or the network device B performs high-frequency monitoring (for example, 10 ms once) on a port state of the aggregation link through an independent high-priority task. When it is found that a port 3 switches from the down state to the up state, if separation of transmitting and receiving is achieved when the port state is set based on the LACP protocol, an ingress forwarding state of all LACP aggregation group member ports are always the forward state. At this time, the port 3 may be added to the aggregation link in an ingress direction, and a state of the port 3 in an egress direction may be set based on the LACP protocol. Member ports in the aggregation link are set immediately, and the port 3 is added to the aggregation link in the egress direction to participate in forwarding. In this way, when a packet is forwarded from the first port to the peer end, no packet loss during switching-back can be achieved because an ingress of the peer end is always in the forward state.

### Embodiment Five

In order to further explain the objective of the present disclosure, further illustration is made based on Embodiment One of the present disclosure.

An application scenario of Embodiment Five of the present disclosure is as follows. Ports provided on a network device A and a network device B are ports which form link aggregation based on the LACP protocol. On the network device A and the network device B, ports of link aggregation include ports 1, ports 2, and ports 3, and the ports 1, the ports 2, and the ports 3 form an aggregation link for load forwarding. The ports 1 and the port 2 are always in the up state, and a port 3 switches from the down state to the up state. The network device A and the network device B may not be directly mated based on the LACP protocol, and there may be a layer 2 network device, through which transparent transmission is performed based on the LACP protocol, between the network device A and the network device B.

A CPU of the network device A or the network device B performs high-frequency monitoring (for example, 10 ms once) on a port state of the aggregation link through an independent high-priority task. When it is found that a port 3 switches from the down state to the up state, if separation of transmitting and receiving is not achieved when the port state is set based on the LACP protocol, an ingress forwarding state of the port 3 at a local end is set to be a forward state immediately. Meanwhile, the port 3 is added to the aggregation link in an ingress direction, and a state of the port 3 in an egress direction may be set based on the LACP protocol. Then, delay for 5 s is performed, (during a 5 s time period of delay, a peer end has set the state of the corresponding port 3 to be the forward state). At this time, a switching-back operation based on the LACP protocol is performed then. In the egress direction, the port 3 is added to the aggregation link to participate in forwarding. It can be understood that, by performing delay for 5 s, the network device at the peer end has set the ingress forwarding state to be the forward state, so that no packet loss during switching-back can be achieved.

### Embodiment Six

In order to further explain the objective of the present disclosure, further illustration is made based on Embodiment One of the present disclosure.

An application scenario of Embodiment Six of the present disclosure is as follows. Ports provided on a network device A and a network device B are ports which form link aggregation based on the LACP protocol. On the network device A and the network device B, ports of link aggregation include ports 1, ports 2, and ports 3, and the ports 1, the ports 2, and the ports 3 form an aggregation link for load forwarding. An aggregation group formed by the ports 1, the ports 2, and the ports 3 is indicated as aggregation group 100. The ports 1 and the port 2 are always in the up state, and a port 3 switches from the down state to the up state. It is default that separation of transmitting and receiving is achieved when the port state is set based on the LACP protocol

Since it is default that separation of transmitting and receiving is achieved when the port state is set based on the LACP protocol, when the ports 3 of the network devices A and B are in the down state, the ports 3 are removed from the aggregation group in an egress direction, and meanwhile a state in the egress direction is a block state. It is default that the ports 3 are added to the aggregation group 100 in an ingress direction, and meanwhile a state of the ports 3 in the ingress direction is a forward state. Since a packet entering the ports 3 would not be forwarded in the same aggregation group 100 after the ports 3 are added to the aggregation link in the ingress direction, a loop between aggregation links can be eliminated.

CPUs of the network devices A and B perform high-frequency monitoring (for example, 10 ms once) on a port state of the aggregation link through an independent high-priority task. When it is found that a port 3 switches from the down state to the up state, a member port of the aggregation group 100 may be set immediately. In the ingress direction, the port 3 is added to the aggregation group, and in the egress direction, a state of the port 3 may be set based on the LACP protocol. A member port of the aggregation group may be set immediately, and in the egress direction, the port 3 is added to the aggregation link to participate in forwarding. In this way, when a packet is transmitted from the port 3 at a local end to the port 3 at a peer end, since the port 3 at the peer end is always in the forward state in the ingress direction, no packet loss during switching-back can be achieved.

### Embodiment Seven

Based on the link aggregation port switching method provided in foregoing embodiments of the present disclosure, Embodiment Seven of the present disclosure provides a link aggregation port switching apparatus, which may be applied in the above network devices.

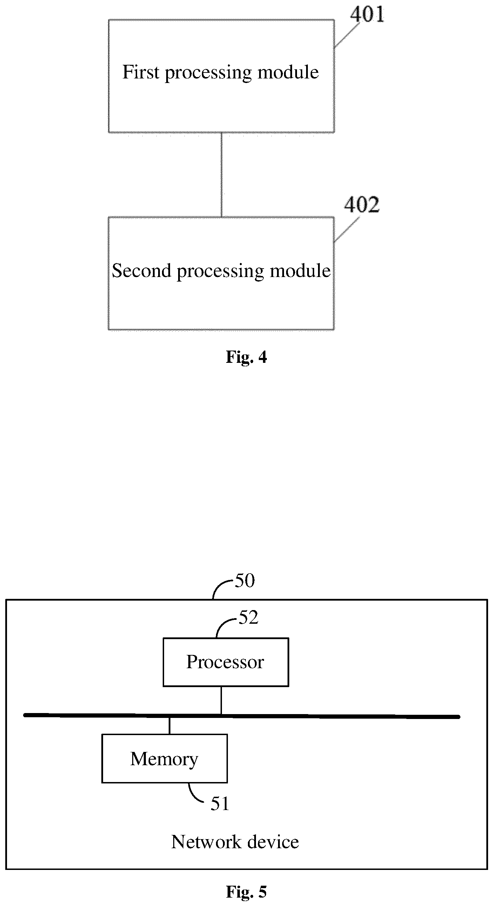

Fig. 4 schematically shows structural components of the link aggregation port switching apparatus in the present embodiment. As shown in Fig. 4, the apparatus includes a first processing module 401 and a second processing module 402.

The first processing module 401 is configured to add a first port to an aggregation link in an ingress direction and set an ingress forwarding state of the first port to be a permitted forwarding state when the first port of link aggregation switches from a down state to an up state.

The second processing module 402 is configured to add the first port to the aggregation link in an egress direction when it is determined that an ingress forwarding state is set to be a permitted forwarding state by a peer end of the first port.

In an embodiment, when a state of each port of link aggregation in the ingress direction and a state of each port of link aggregation in the egress direction are set independently, an ingress forwarding state of each port of link aggregation is always a permitted forwarding state.

In an embodiment, after adding the first port to the aggregation link in the ingress direction and setting the ingress forwarding state of the first port to be the permitted forwarding state, the second processing module 402 is further configured to, when a state of each port of link aggregation in the ingress direction and a state of each port of link aggregation in the egress direction are not set independently, transmit a private protocol packet to the peer end of the first port via the first port and determine, after waiting for a first preset time length, that the peer end of the first port sets an ingress forwarding state to be a permitted forwarding state.

In an embodiment, the first preset time length is larger than or equal to a sum of a pre-estimated packet transmission time length and a pre-estimated first state changing time length. The packet transmission time length refers to a time length during which the private protocol packet is transmitted from the first port to the peer end of the first port. The first state changing time length refers to a time length during which the peer end of the first port sets the ingress forwarding state to be the permitted forwarding state after receiving the private protocol packet.

In an embodiment, after adding the first port to the aggregation link in the ingress direction and setting the ingress forwarding state of the first port to be the permitted forwarding state, the second processing module 402 is further configured to, when a state of each port of link aggregation in the ingress direction and a state of each port of link aggregation in the egress direction are not set independently, determine, after waiting for a second preset time length, that the peer end of the first port sets an ingress forwarding state to be a permitted forwarding state.

In an embodiment, the second preset time length is larger than or equal to a pre-estimated second state changing time length. The second state changing time length is a time interval between a first time instant and a second time instant. The first time instant is a time instant when the first port switches from the down state to the up state, and the second time instant is a time instant when the peer end of the first port sets the ingress forwarding state to be the permitted forwarding state.

In an embodiment, the second processing module 402 is further configured to improve a monitoring frequency of a port state of the link aggregation, and to delete the first port from the aggregation link when it is monitored that the first port of the link aggregation switches from the up state to the down state.

In an embodiment, the second processing module 402 is further configured to improve priority of a monitoring task of a port state of the link aggregation, and to delete the first port from the aggregation link when it is monitored that the first port of the link aggregation switches from the up state to the down state.

In an embodiment, the second processing module 402 is further configured to improve a monitoring frequency of a port state of the link aggregation and improve priority of a monitoring task of a port state of the link aggregation, and to delete the first port from the aggregation link when it is monitored that the first port of the link aggregation switches from the up state to the down state.

In actual application, both the first processing module 401 and the second processing module 402 mentioned above may be implemented by a CPU, a micro-processor unit (MPU), a DSP, or an FPGA, and so on.

Moreover, respective functional modules in the present embodiment may be integrated into one processing unit; or respective units may be physically present separately; or two or more units are integrated into one unit. The above integrated unit may be implemented in the form of hardware, and may be implemented in the form of a software functional unit.

If the integrated unit implemented in the form of the software functional unit is not marketed or used as an independent product, the integrated unit may be stored in a computer-readable storage medium. Based on such understanding, the technical solution in essence, or the portion of the technical solution that makes contribution to existing technology, or all or part of the technical solution may be embodied in the form of a software product. The computer software product is stored in a storage medium, and includes several instructions which cause one computer device (which may be a personal computer, a server, or a network device, and so on) or a processor to execute all or part of steps of the method provided in embodiments of the present disclosure. The aforementioned storage medium includes various mediums that may store program codes, such as a USB disk, a mobile hard disk drive, a read only memory (ROM), a random access memory (RAM), a diskette, or an optical disk.

Specifically, computer program instructions corresponding to the link aggregation port switching method in embodiments of the present disclosure may be stored on storage mediums such as an optical disk, a hard disk drive, and a USB disk. When the computer program instructions that are in the storage medium and correspond to the link aggregation port switching method are read or executed by an electronic device, the computer program instructions implement steps of any link aggregation port switching method in the above embodiments.

Based on a technical idea that is the same as that in the above embodiments, Fig. 5 shows a network device 50 provided in the present embodiment. The network device 50 may include a first port of aggregation link (not shown in Fig. 5), a memory 51, and a processor 52. The memory 51 is configured to store a computer program and data. The processor 52 is configured to execute the computer program stored in the memory, so as to implement steps of any link aggregation port switching method in the above embodiments.

In actual implementation, the above memory 51 may be a volatile memory, such as a RAM, or a non-volatile memory, such as a ROM, a flash memory, a hard disk drive (HDD), or a solid-state drive (SSD), or a combination of the above types of memory, and provides instructions and data to the processor 52.

The above processor 52 may be at least one of an ASIC, a DSP, a DSPD, a PLD, an FPGA, a CPU, a controller, a microcontroller, and a micro-processor unit. An electronic device for implementing the above functions of the processor may also be other devices, and specific limitation is not made in the present embodiment.

The link aggregation port switching method, the network device, and the computer storage medium provided according to embodiments of the present disclosure can achieve quick switching and lossless switching-back of a link aggregation port in a link of the link aggregation control protocol (LACP), and may avoid packet loss when the port switches from a down state to an up state.

Those skilled in the art should understand that an embodiment of the present disclosure may be provided as a method, a system, or a computer program product. Accordingly, the present disclosure may adopt a form of a hardware embodiment, a software embodiment, or an embodiment combining hardware and software aspects. Moreover, the present disclosure may adopt a form of a computer program product that is implemented on one or more computer usable storage mediums (which includes, but is not limited to, a disk memory and an optical memory) including computer usable program codes therein.

The present disclosure is described by referring to a flowchart and/or a block diagram of a method, a device (system), and a computer program product according to embodiments of the present disclosure. It should be understood that each procedure and/or each block in the flowchart and/or the block diagram and a combination of a procedure and/or a block in the flowchart and/or the block diagram may be implemented by computer program instructions. These computer program instructions may be provided to a general purpose computer, a special purpose computer, an embedded processor, or a processor of other programmable data processing devices to generate a machine, so that instructions executed by the computer or the processor of other programmable data processing devices generate an apparatus for implementing functions specified in one procedure or more procedures of the flowchart and/or one block or more blocks of the block diagram.

These computer program instructions may also be stored in a computer readable memory which can guide the computer or other programmable data processing devices to work in a particular manner, so that the instructions stored in the computer readable memory generate an article of manufacture including an instruction apparatus, which implements functions specified in one procedure or more procedures of the flowchart and/or one block or more blocks of the block diagram.

These computer program instructions may also be loaded to the computer or other programmable data processing devices, so that a series of operation steps are implemented on the computer or other programmable devices to generate processing performed by the computer. Therefore, instructions executed on the computer or other programmable devices provide steps for implementing functions specified in one procedure or more procedures of the flowchart and/or one block or more blocks of the block diagram.

The above description only relates to exemplary embodiments of the present disclosure, and is not used for limiting the protection scope of the present disclosure.

## Claims

1. A link aggregation port switching method, comprising:
adding a first port to an aggregation link in an ingress direction and setting an ingress forwarding state of the first port to be a permitted forwarding state in response to the first port of link aggregation switching from a down state to an up state (301); and
adding the first port to the aggregation link in an egress direction in response to determining that an ingress forwarding state is set to be a permitted forwarding state by a peer end of the first port (302),
wherein after adding the first port to the aggregation link in the ingress direction and setting the ingress forwarding state of the first port to be the permitted forwarding state, the method further comprises:
transmitting, when a state of each port of link aggregation in the ingress direction and a state of each port of link aggregation in the egress direction are not set independently, a private protocol packet to the peer end of the first port via the first port, the private protocol packet being configured to be received by a CPU of a network device at the peer end for setting an ingress state of the peer end of the first port to be a forward state by the CPU; and
determining, after waiting for a first preset time length, that the peer end of the first port sets an ingress forwarding state to be a permitted forwarding state.

2. The method according to claim 1, further comprising;
when a state of each port of link aggregation in the ingress direction and a state of each port of link aggregation in the egress direction are set independently, an ingress forwarding state of each port of link aggregation is always a permitted forwarding state.

3. The method according to claim 1, wherein the first preset time length is larger than or equal to a sum of a pre-estimated packet transmission time length and a pre-estimated first state changing time length, wherein the packet transmission time length refers to a time length during which the private protocol packet is transmitted from the first port to the peer end of the first port, and the first state changing time length refers to a time length during which the peer end of the first port sets the ingress forwarding state to be the permitted forwarding state after receiving the private protocol packet.

4. The method according to claim 1, wherein after adding the first port to the aggregation link in the ingress direction and setting the ingress forwarding state of the first port to be the permitted forwarding state, the method further comprises:
determining, when a state of each port of link aggregation in the ingress direction and a state of each port of link aggregation in the egress direction are not set independently, that the peer end of the first port sets an ingress forwarding state to be a permitted forwarding state after waiting for a second preset time length.

5. The method according to claim 4, wherein the second preset time length is larger than or equal to a pre-estimated second state changing time length, wherein the second state changing time length is a time interval between a first time instant and a second time instant, wherein the first time instant is a time instant when the first port switches from the down state to the up state, and the second time instant is a time instant when the peer end of the first port sets the ingress forwarding state to be the permitted forwarding state.

6. The method according to any one of claims 1 to 5, further comprising:
increasing a monitoring frequency of a port state of the link aggregation; and
deleting the first port from the aggregation link in response to monitoring that the first port of the link aggregation switches from the up state to the down state.

7. The method according to any one of claims 1 to 5, further comprising:
boosting priority of a monitoring task of a port state of the link aggregation; and
deleting the first port from the aggregation link in response to monitoring that the first port of the link aggregation switches from the up state to the down state.

8. The method according to any one of claims 1 to 5, further comprising:
increasing a monitoring frequency of a port state of the link aggregation and boosting priority of a monitoring task of a port state of the link aggregation; and
deleting the first port from the aggregation link in response to monitoring that the first port of the link aggregation switches from the up state to the down state.

9. A network device, comprising: a first port of aggregation link, a processor, and a memory for storing a computer program capable of running on the processor, wherein the processor is configured to, when executing the computer program, implement steps of the method according to any one of claims 1-8.

10. A computer storage medium, on which a computer program is stored, wherein the computer program, when executed by a processor, causes the processor to implement steps of the method according to any one of claims 1-8.

## Patentansprüche

1. Verfahren zum Schalten von Verbindungsaggregationsanschlüssen, das Folgendes umfasst:
Hinzufügen eines ersten Anschlusses zu einer Aggregationsverbindung in einer Eingangsrichtung und Einstellen eines Eingangsweiterleitungszustands des ersten Anschlusses als einen zugelassenen Weiterleitungszustand als Reaktion darauf, dass der erste Anschluss der Verbindungsaggregation von einem Abwärtszustand in einen Aufwärtszustand schaltet (301); und
Hinzufügen des ersten Anschlusses zu der Aggregationsverbindung in einer Ausgangsrichtung als Reaktion auf das Bestimmen, dass ein Eingangsweiterleitungszustand durch eine Gegenstelle des ersten Anschlusses als ein zugelassener Weiterleitungszustand eingestellt ist (302),
wobei das Verfahren nach dem Hinzufügen des ersten Anschlusses zu der Aggregationsverbindung in der Eingangsrichtung und dem Einstellen des Eingangsweiterleitungszustands des ersten Anschlusses als den zugelassenen Weiterleitungszustand ferner Folgendes umfasst:
Übertragen, wenn ein Zustand jedes Anschlusses der Verbindungsaggregation in der Eingangsrichtung und ein Zustand jedes Anschlusses der Verbindungsaggregation in der Ausgangsrichtung nicht unabhängig eingestellt sind, eines privaten Protokollpakets über den ersten Anschluss an die Gegenstelle des ersten Anschlusses, wobei das private Protokollpaket konfiguriert ist, um durch eine CPU einer Netzwerkvorrichtung an der Gegenstelle empfangen zu werden, um einen Eingangszustand der Gegenstelle des ersten Anschlusses durch die CPU als einen Weiterleitungszustand einzustellen; und
Bestimmen, nach dem Warten auf eine erste voreingestellte Zeitdauer, dass die Gegenstelle des ersten Anschlusses einen Eingangsweiterleitungszustand als einen zugelassenen Weiterleitungszustand einstellt.

2. Verfahren nach Anspruch 1, das ferner Folgendes umfasst:
wenn ein Zustand jedes Anschlusses der Verbindungsaggregation in der Eingangsrichtung und ein Zustand jedes Anschlusses der Verbindungsaggregation in der Ausgangsrichtung unabhängig eingestellt sind, ist ein
Eingangsweiterleitungszustand jedes Anschlusses der Verbindungsaggregation immer ein zugelassener Weiterleitungszustand.

3. Verfahren nach Anspruch 1, wobei die erste voreingestellte Zeitdauer größer als oder gleich einer Summe einer vorab geschätzten Paketübertragungszeitdauer und einer vorab geschätzten ersten Zustandsänderungszeitdauer ist, wobei sich die Paketübertragungszeitdauer auf eine Zeitdauer bezieht, während der das private Protokollpaket von dem ersten Anschluss an die Gegenstelle des ersten Anschlusses übertragen wird, und sich die erste Zustandsänderungszeitdauer auf eine Zeitdauer bezieht, während der die Gegenstelle des ersten Anschlusses den Eingangsweiterleitungszustand nach dem Empfangen des privaten Protokollpakets als den zugelassenen Weiterleitungszustand einstellt.

4. Verfahren nach Anspruch 1, wobei das Verfahren nach dem Hinzufügen des ersten Anschlusses zu der Aggregationsverbindung in der Eingangsrichtung und dem Einstellen des Eingangsweiterleitungszustands des ersten Anschlusses als den zugelassenen Weiterleitungszustand ferner Folgendes umfasst:
Bestimmen, wenn ein Zustand jedes Anschlusses der Verbindungsaggregation in der Eingangsrichtung und ein Zustand jedes Anschlusses der Verbindungsaggregation in der Ausgangsrichtung nicht unabhängig eingestellt sind, dass die Gegenstelle des ersten Anschlusses einen Eingangsweiterleitungszustand als einen zugelassenen Weiterleitungszustand einstellt, nach dem Warten auf eine zweite voreingestellte Zeitdauer.

5. Verfahren nach Anspruch 4, wobei die zweite voreingestellte Zeitdauer größer als oder gleich einer vorab geschätzten zweiten Zustandsänderungszeitdauer ist, wobei die zweite Zustandsänderungszeitdauer ein Zeitintervall zwischen einem ersten Zeitpunkt und einem zweiten Zeitpunkt ist, wobei der erste Zeitpunkt ein Zeitpunkt ist, zu dem der erste Anschluss von dem Abwärtszustand in den Aufwärtszustand schaltet, und der zweite Zeitpunkt ein Zeitpunkt ist, zu dem die Gegenstelle des ersten Anschlusses den Eingangsweiterleitungszustand als den zugelassenen Weiterleitungszustand einstellt.

6. Verfahren nach einem der Ansprüche 1 bis 5, das ferner Folgendes umfasst:
Erhöhen einer Überwachungsfrequenz eines Anschlusszustands der Verbindungsaggregation; und
Löschen des ersten Anschlusses aus der Aggregationsverbindung als Reaktion auf das Überwachen, dass der erste Anschluss der Verbindungsaggregation von dem Aufwärtszustand in den Abwärtszustand schaltet.

7. Verfahren nach einem der Ansprüche 1 bis 5, das ferner Folgendes umfasst:
Verstärken der Priorität einer Überwachungsaufgabe eines Anschlusszustands der Verbindungsaggregation; und
Löschen des ersten Anschlusses aus der Aggregationsverbindung als Reaktion auf das Überwachen, dass der erste Anschluss der Verbindungsaggregation von dem Aufwärtszustand in den Abwärtszustand schaltet.

8. Verfahren nach einem der Ansprüche 1 bis 5, das ferner Folgendes umfasst:
Erhöhen einer Überwachungsfrequenz eines Anschlusszustands der Verbindungsaggregation und Verstärken der Priorität einer Überwachungsaufgabe eines Anschlusszustands der Verbindungsaggregation; und
Löschen des ersten Anschlusses aus der Aggregationsverbindung als Reaktion auf das Überwachen, dass der erste Anschluss der Verbindungsaggregation von dem Aufwärtszustand in den Abwärtszustand schaltet.

9. Netzwerkvorrichtung, die Folgendes umfasst: einen ersten Anschluss der Aggregationsverbindung, einen Prozessor und einen Speicher zum Speichern eines Computerprogramms, das zum Ausführen auf dem Prozessor in der Lage ist, wobei der Prozessor konfiguriert ist, um beim Ausführen des Computerprogramms Schritte des Verfahrens nach einem der Ansprüche 1 bis 8 zu implementieren.

10. Computerspeichermedium, auf dem ein Computerprogramm gespeichert ist, wobei das Computerprogramm beim Ausführen durch einen Prozessor bewirkt, dass der Prozessor Schritte des Verfahrens nach einem der Ansprüche 1 bis 8 implementiert.

## Revendications

1. Procédé de commutation de port d'agrégation de liaison, comprenant les étapes consistant à :
ajouter un premier port à une liaison d'agrégation dans une direction d'entrée et définir un état de transfert d'entrée du premier port comme étant un état de transfert autorisé en réponse à commuter par le premier port d'agrégation de liaison d'un état inactif à un état actif (301) ; et
ajouter le premier port à la liaison d'agrégation dans une direction de sortie en réponse à déterminer qu'un état de transfert d'entrée est défini comme étant un état de transfert autorisé par une extrémité homologue du premier port (302),
dans lequel, après avoir ajouté le premier port à la liaison d'agrégation dans la direction d'entrée et avoir défini l'état de transfert d'entrée du premier port comme étant l'état de transfert autorisé, le procédé comprend en outre les étapes consistant à :
envoyer, lorsqu'un état de chaque port d'agrégation de liaison dans la direction d'entrée et un état de chaque port d'agrégation de liaison dans la direction de sortie ne sont pas définis indépendamment, un paquet de protocole privé à l'extrémité homologue du premier port par l'intermédiaire du premier port, le paquet de protocole privé étant configuré pour être reçu par une CPU d'un dispositif de réseau au niveau de l'extrémité homologue pour définir un état d'entrée de l'extrémité homologue du premier port comme étant un état de transfert par la CPU ; et
déterminer, après avoir attendu pendant une première durée prédéfinie, que l'extrémité homologue du premier port définit un état de transfert d'entrée comme étant un état de transfert autorisé.

2. Procédé selon la revendication 1, comprenant en outre les étapes consistant à :
lorsqu'un état de chaque port d'agrégation de liaison dans la direction d'entrée et un état de chaque port d'agrégation de liaison dans la direction de sortie sont définis indépendamment, un état de transfert d'entrée de chaque port d'agrégation de liaison est toujours un état de transfert autorisé.

3. Procédé selon la revendication 1, dans lequel la première durée prédéfinie est supérieure ou égale à une somme d'une durée de transmission de paquet pré-estimée et d'une première durée de changement d'état pré-estimée, dans lequel la durée de transmission de paquet se réfère à une durée pendant laquelle le paquet de protocole privé est envoyé du premier port à l'extrémité homologue du premier port, et la première durée de changement d'état se réfère à une durée pendant laquelle l'extrémité homologue du premier port définit l'état de transfert d'entrée comme étant l'état de transfert autorisé après avoir reçu le paquet de protocole privé.

4. Procédé selon la revendication 1, dans lequel, après avoir ajouté le premier port à la liaison d'agrégation dans la direction d'entrée et avoir défini l'état de transfert d'entrée du premier port comme étant l'état de transfert autorisé, le procédé comprend en outre les étapes consistant à :
déterminer, lorsqu'un état de chaque port d'agrégation de liaison dans la direction d'entrée et un état de chaque port d'agrégation de liaison dans la direction de sortie ne sont pas définis indépendamment, que l'extrémité homologue du premier port définit un état de transfert d'entrée comme étant un état de transfert autorisé après avoir attendu pendant une seconde durée prédéfinie.

5. Procédé selon la revendication 4, dans lequel la seconde durée prédéfinie est supérieure ou égale à une seconde durée de changement d'état pré-estimée, dans lequel la seconde durée de changement d'état est un intervalle de temps entre un premier instant et un second instant, dans lequel le premier instant est un instant auquel le premier port commute de l'état inactif à l'état actif, et le second instant est un instant auquel l'extrémité homologue du premier port définit l'état de transfert d'entrée comme étant l'état de transfert autorisé.

6. Procédé selon l'une quelconque des revendications 1 à 5, comprenant en outre les étapes consistant à :
augmenter une fréquence de surveillance d'un état de port de l'agrégation de liaison ; et
supprimer le premier port de la liaison d'agrégation en réponse à la surveillance du fait que le premier port de l'agrégation de liaison commute de l'état actif à l'état inactif.

7. Procédé selon l'une quelconque des revendications 1 à 5, comprenant en outre les étapes consistant à :
amplifier la priorité d'une tâche de surveillance d'un état de port de l'agrégation de liaison ; et
supprimer le premier port de la liaison d'agrégation en réponse à la surveillance du fait que le premier port de l'agrégation de liaison commute de l'état actif à l'état inactif.

8. Procédé selon l'une quelconque des revendications 1 à 5, comprenant en outre les étapes consistant à :
augmenter une fréquence de surveillance d'un état de port de l'agrégation de liaison et amplifier la priorité d'une tâche de surveillance d'un état de port de l'agrégation de liaison ; et
supprimer le premier port de la liaison d'agrégation en réponse à la surveillance du fait que le premier port de l'agrégation de liaison commute de l'état actif à l'état inactif.

9. Dispositif de réseau, comprenant : un premier port de liaison d'agrégation, un processeur et une mémoire pour stocker un programme informatique capable de s'exécuter sur le processeur, dans lequel le processeur est configuré pour, lors de exécuter le programme informatique, mettre en œuvre les étapes du procédé selon l'une quelconque des revendications 1 à 8.

10. Moyen de stockage informatique, sur lequel un programme informatique est stocké, dans lequel le programme informatique, lorsqu'il est exécuté par un processeur, amène le processeur à mettre en œuvre les étapes du procédé selon l'une quelconque des revendications 1 à 8.
